# EUROPEAN PATENT APPLICATION

(11) **EP 4 629 645 A1**
(43) Date of publication of application: **08.10.2025**
(21) Application number: 24168771.4
(22) Date of filing: 05.04.2024
(51) Int. Cl.: H04N 21/442, H04N 21/63, H04N 21/845

(54) **P2P VIDEO STREAMING**

(71) Applicant: Vestel Elektronik Sanayi ve Ticaret A.S., 45030 Manisa (TR)
(72) Inventor: AYGÜL, Mehmet Ali, 45030 Manisa (TR); KIRISKEN, Barbaros, 45030 Manisa (TR)
(74) Representative: Hoffmann Eitle

(57) **Abstract**

A method for downloading a video streaming content over a peer-to-peer, P2P, network having a plurality of nodes, the video streaming content comprising a first portion and a second portion to be played in immediate succession to the first portion. The method comprises: obtaining resource information for the video streaming content indicating that at least one node of the P2P network stores the video streaming content with a first video format and that at least one node of the P2P network stores the video streaming content with a second video format, the second video format having a lower bitrate requirement than the first video format; requesting, from a first node of the P2P network, the first portion in the first video format, and obtaining from the first node first data comprising the first portion in the first video format, wherein the first data comprises first time information providing a time reference for at least one first video frame in the first portion; initiating a playback of the video streaming content in accordance with the first video format; determining, based on a decrease in throughput for downloading the video streaming content, to use the second video format in the playback of the video streaming content; requesting, from a second node of the P2P network, the second portion in the second video format, and obtaining from the second node second data comprising the second portion of the video streaming content in the second video format, wherein the second data comprises second time information providing a time reference for at least one second video frame in the second portion; and processing the first data, the second data, the first time information and the second time information, to transition from the playback of the first portion to a playback of the second portion in accordance with the second video format.

## Description

### Technical field

Example aspects herein relate to peer-to-peer (P2P) video streaming and in particular, to a method, a computer program, and a node for a P2P network.

### Background

Video content that is distributed over a P2P computer network can be streamed (i.e. obtained and visualised) by a user. The video streaming content is typically split into parts (e.g. segments) that can be individually addressed, and the user obtains each segment from other users (peers) in the P2P network having a copy of the video streaming content. Each segment contains the visual data (e.g. video frames) and audio data for a corresponding part of the video streaming content, and the video streaming content is obtained by obtaining each segment.

In case of disruptions in the throughput when downloading the video streaming content onto the user's device, the stream can be interrupted while the user's device downloads the next segment of the video streaming content to be played, thus negatively affecting user experience.

Solutions that could be used in a video-on-demand (VOD) system cannot be implemented in P2P networks because in VOD systems it is the distributor determining how content is provided, in P2P video streaming, it is the user (i.e. the receiver) querying for content that controls how video streaming content to be streamed is retrieved from different peers.

### Summary

There is therefore a need for improving user experience when streaming video via a P2P network, and a particular aim of the present disclosure is to provide an uninterrupted video stream over a P2P network to the user even when variations in throughput occur.

According to a first example aspect herein, there is provided a method for downloading a video streaming content over a peer-to-peer, P2P, network having a plurality of nodes. The video streaming content comprises a first portion and a second portion to be played in immediate succession to the first portion. The method comprises:
obtaining resource information for the video streaming content indicating that at least one node of the P2P network stores the video streaming content with a first video format and that at least one node of the P2P network stores the video streaming content with a second video format, the second video format having a lower bitrate requirement than the first video format;
requesting, from a first node of the P2P network, the first portion in the first video format, and obtaining from the first node first data comprising the first portion in the first video format, wherein the first data comprises first time information providing a time reference for at least one first video frame in the first portion;
initiating a playback of the video streaming content in accordance with the first video format; determining, based on a decrease in throughput for downloading the video streaming content, to use the second video format in the playback of the video streaming content;
requesting, from a second node of the P2P network, the second portion in the second video format, and obtaining from the second node second data comprising the second portion of the video streaming content in the second video format, wherein the second data comprises second time information providing a time reference for at least one second video frame in the second portion; and
processing the first data, the second data, the first time information and the second time information, to transition from the playback of the first portion to a playback of the second portion in accordance with the second video format.

Accordingly, despite the decrease in the throughput, the video streaming content can continue to be played by using a video format having a lower bitrate requirement. Thus, no interruption to the playback of the video streaming content occurs, improving user experience.

In particular, by specifying a video format when requesting a portion of the video streaming format, the node in the P2P network can dynamically control in which video format segments of the video streaming content will be received and played back, thus adapting to changes in the network communication conditions.

The node (e.g. the retrieving node) obtaining the content may represent, for example, the user's device which may be any electronic device such as a computer, a mobile phone, a tablet computer, etc.

The resource information for the video can be obtained from a server connected to the P2P network. The server may have a database storing resource information for each file available on the P2P network (i.e. each file stored on one or more nodes of the P2P network and made available for sharing to other nodes of the P2P network). The P2P network may be connected to more than one such centralized server. Alternatively, the resource information may be gathered by querying one or more nodes, including the aforementioned first node and/or second node, for information on the video streaming content. Each queried node may forward the query to other nodes in the P2P network, and return information to the node originating the query.

As used herein, a portion of a video streaming content refers to a series of video frames that are to be displayed in sequence at a specific time of the video streaming content during a playback of the video streaming content, along with any audio information associated to the series of video frames. For simplicity, the present disclosure refers to visual data or video frames only, although it would be understood that audio data may, in some video content, be provided as well.

Preferably, a portion of the video streaming content corresponds to a number of (one or more) segments of the video streaming content in a given video format. It would be apparent that in different video formats, the segments may not be aligned or have the same length.

Preferably, the first data comprises one or more first segments of the video streaming content in the first video format.

Preferably, the second data comprises one or more second segments of the video streaming content in the second video format.

As used herein, segments will refer to the sequence of video frames, which may be presented (i.e. wrapped) with associated metadata, such as header data, in a given format.

As used herein, a bitrate requirement can be defined based on the minimum throughput required to obtain segments and process them in time to have a playback of the video streaming content without interruption.

The time information (e.g. the first time information or the second time information) may be stored as metadata, for example in a header of the corresponding segment (or as metadata associated with the corresponding frames of the segment). The time information may comprise timecode information, for example as SMPTE (Society of Motion Picture and Television Engineers) timecode.

As used herein, a time reference provided for a video frame (e.g. a first video frame of the first portion or a second video frame of the second portion) is used to determine a playback timing of the video frame, within the playback of the video streaming content.

In the first example aspect described above, the node(s) storing the video streaming content in (e.g. encoded with or using) the first video format and the node(s) storing the video streaming content in the second video format are not necessarily separate nodes. In particular, the first node and the second node are not necessarily separate nodes. In other words, any node of the P2P network may store both the first portion of the video streaming content in the first video format and the second portion of the video streaming content in the second video format.

As will be explained below, the decrease in throughput may be due to issues on the communication link, or may be due to a decrease in the bandwidth allocated to the download of video streaming content, and thus a decrease in throughput should be understood to cover the case of a decrease in the bandwidth available (or allocate) for retrieving the video streaming content.

Either a decrease in throughput that is occurring (or has occurred) can be identified, or a decrease may be predicted to occur during the download of a segment of the video streaming content subsequent to the first portion.

Accordingly, the identified decrease may be defined as a decrease susceptible to cause an interruption in the playback of the video streaming content in accordance with the first video format.

The decrease in throughput can be considered to be susceptible to cause an interruption in the playback based on a number of factor, for example if the throughput decreases by at least a threshold value (e.g. if the throughput decreases by at least X Mbps), if the throughput decreases to or below a threshold value (e.g. the throughput becomes X Mbps or less), etc. In the given examples, the threshold value can be predetermined, or it may be based on characteristics of the video streaming content. For example, the threshold value may be based on a bitrate required by a video format used for the video streaming content, a resolution in which the video streaming content is available, a size of the video streaming content, a size of chunks in which the video streaming content is divided, etc.

It would be understood that, in some cases, the decrease in throughput would be too significant that even transitioning to the second video format (or to a video format having the lowest possible bitrate requirement), the playback of the video streaming content cannot complete without an interruption, for example to buffer data to be played. However, as long as the throughput is sufficient to sustain the retrieval of data at any available data format, the playback of the video streaming content can proceed substantially uninterrupted. Thus, statements of playing back "without interrupting the playback" should be understood to

As used herein, obtaining data can be interpreted as receiving, retrieving or downloading the data.

Preferably, requesting from another node of the P2P network a specific portion of the video streaming content with a specific video format comprises:
identifying, based on the resource information, at least one node storing the specific portion with the specific video format;
transmitting a request to the identified at least one node for the specific portion with the specific video format;
receiving, in response to the request, the specific portion with the specific video format.
Preferably, the method comprises, making a received specific portion with a specific video format available to other nodes of the P2P network.
Preferably, the playback of the video streaming content in accordance with the first video format comprises the playback of at least one video frame corresponding to the first portion in accordance with the first video format.
It would be understood that the method described herein is performed at least partially on a computer, and can thus be defined as a computer-implemented method.

Preferably, the processing to transition comprises determining a second video frame in the second data to be played in immediate succession of a first video frame in the first data, based on the first time information and the second time information.

Accordingly, the playback can be determined to transit from the first portion to the second portion between the pair of first video frame and second video frame, thus facilitating a smooth transition.

Preferably, the first video frame is a last video frame of the first portion and/or the second video frame is a first video frame of the second portion.

Accordingly, the processing required to identify an intermediate video frame as the first video frame (or as the second video frame) can be omitted, thus allowing an easier and/or faster determination of a playback timing for the transition. Additionally, any processing to discard video frames coming after the first video frame and/or before the second video frame can be omitted as well, thus simplifying the processing.

Preferably, the processing the first data, the second data, the first time information and the second time information, to transition from a playback of the first portion to a playback of the second portion comprises determining any overlap between a first segment of the video streaming content corresponding to the first portion and a second segment of the video streaming content corresponding to the second portion.

Accordingly, the transition can be made at any selected time during the overlap without any visual data from the first segment being missed, as each video frame have a corresponding video frame in the second segment portion.

Preferably, the first time information defines for each of the at least one first video frame, a respective first time period relative to a reference point of the video streaming content, and the second time information defines, for each of the at least one second video frame, a respective second time period relative to a reference point of the video streaming content.

It would be understood that the video streaming content may include any number of reference points. Accordingly, reference to "a reference point" should be understood to cover, in some cases, "one of a plurality of reference points".

The first/second time period may indicate when the corresponding first/second video frame should be played relative to the reference point of the video streaming content.

For example, the reference point may be the start of the video streaming content, and the first/second time period may indicate a time period which must elapse during the playback of the video streaming content before the corresponding first/second video frame is to be played (i.e. displayed, along with any associated audio information).

Preferably, the first time information defines a respective time period for the last video frame of the first portion. In other words, the first time information indicates a time period between the end of the first portion and the reference point.

Preferably, the second time information defines a respective time period for the first video frame of the second portion and the reference point. In other words, the second time information indicates a time period between the start of the second portion and the reference point.

Accordingly, as any overlap would be between an end of a segment (in the first video format) corresponding to the first portion and a beginning of a segment (in the second video format) corresponding to the second portion, the determination of any overlap would be facilitated.

Preferably, the reference point is one of: a start of the video streaming content, an end of the video streaming content or one of a number of periodic intermediate playback timings of the video streaming content.

For example, the video streaming content with one of the video formats (e.g. a reference or default format) may be split into segments having fixed time length. Each of these segments may have a corresponding playback timing used as a reference point (e.g. a playback timing corresponding to the start of the segment).

Preferably, the method further comprises:
identifying an increase in throughput to a level allowing playback in accordance with the first video format;
requesting, from a third node, a third portion of the video streaming content in the first video format, and obtaining from the third node third data comprising a third portion of the video streaming content in the first video format, wherein the third portion is to be played in immediate succession to the second portion, and wherein the third data comprises third time information providing a time reference for at least one third video frame in the third portion; and
processing the second data, the third data, the second time information and the third time information to transition from a playback of the second portion to a playback of the third portion in accordance with the first video format, without interrupting the playback of the video streaming content.

The third node may be the same as the first node and/or the same as the second node described above.

As explained above in connection with the first time information or the second time information, the third time information may define, for each of the at least one third video frame, a respective third time period relative to a reference point of the video streaming content.

It would be understood that, in the alternative case where no increase in throughput is detected, the method may comprise requesting from another node of the P2P network the third portion of the video streaming content in the second video format, and processing fourth data comprising the third portion and fourth time information included in the fourth data instead of processing the third data, to transition from a playback of the second portion to a playback of the third portion in accordance with the second video format. The same may be repeated until the end of the playback of the video streaming content, without interrupting the playback of the video streaming content.

Preferably, the third data comprises one or more third segments of the video streaming content in the first video format.

Preferably, the identifying the decrease in throughput comprises:
monitoring at least one parameter related to a data connection to one or more nodes of the P2P network and indicating the throughput, and
detecting a change in a value of the at least one parameter indicative of the decrease in throughput.
Preferably, the identifying the decrease in throughput is based on at least one of:
   (i) a first determination that a remaining playback time to a playback timing of a last video frame of the first portion is less than a time required for downloading a subsequent segment of the video streaming content in the first video format;
   (ii) a second determination that a latency value to a node of the P2P network is above a first threshold; and
   (iii) a third determination that a speed at which the video streaming content is being retrieved from other nodes of the P2P network is below a second threshold.

The subsequent segment of the video streaming content may be the segment to be played subsequently to the first portion. Accordingly, the subsequent segment may correspond at least partially to the second portion, i.e. the subsequent segment in the first video format may at least partially overlap with one or more segments in the second video format corresponding to the second portion.

The remaining playback time indicates the time period that is to elapse until the last video frame of the first portion is to be played, and therefore the time by which the subsequent segment needs to be obtained and starts to be played to avoid an interruption in the playback. Thus, the first determination indicates whether the video streaming content can continue to be obtained at the first video format in time for a continuous playback.

As used herein, an overlap between segments of different video formats would be understood to mean that they comprise a number of overlapping video frames. The video frames are overlapping in the sense that they include the same essence (or visual data together with audio data, if any) that would be presented to the user when either overlapping segment is played back (albeit in a different video format, for example at different resolutions).

It would be understood that the second determination and/or the third determination may have a minimum duration requirement. In other words, the second determination may be that the latency value is above the first threshold for a first specific duration or more.

Similarly, the third determination may be that the speed at which the video streaming content (e.g. the first data, or data comprising a portion subsequent to the first portion encoded at the first video format) is being retrieved from other nodes of the P2P network, becomes lower than the second threshold for a second specific duration or more. In such cases, the second specific duration used for the third determination is not necessarily the same as the first specific duration used for the second determination.

Either specific duration may be predetermined, or it may be based on characteristic(s) of the first video format (e.g. the bitrate requirement for the video format used for the portion of the video streaming content being retrieved).

Preferably, the resource information for the video streaming content indicates that the video streaming content is stored on the P2P network with a plurality of video formats including the first video format the second video format, each video format having a respective bitrate requirement, and
the determining to use the second video format comprises selecting the second video format out of the plurality of video formats based on the respective bitrate requirement of each video format.

Different values of the throughput may support the bitrate requirement of different video formats. Accordingly, depending on the new, decreased value of the throughput, a different video format may be selected to continue the playback of the video streaming content without interruption.

Preferably, the selected video format has the highest bitrate requirement that is supported by the new value of throughput.

Accordingly, the video streaming content can be played back with the highest available quality whilst avoiding interruption.

Preferably, the method further comprises making available to the other nodes of the P2P network, at least one of the first data and the second data.

In other words, (segments of) the first portion may be made available to other nodes desiring the video streaming content in the first video format, and/or (segments of) the second portion may be made available to other nodes desiring the video streaming content in the second video format.

Preferably, the method further comprises:
receiving, from another node of the P2P network, a request for a part of the video streaming content comprising the first portion in the first video format or the second portion in the second video format; and
transmitting, to the other node, the requested part.

By making the at least one of the first data and second data available, the other nodes can make a request to obtain a copy of the first data and/or second data, thus allowing the content to be distributed on the P2P network.

Preferably, the first video format and the second video format differ in at least one of a resolution of the video streaming content and a video compression format.

Preferably, each portion corresponds to a respective segment of the video streaming content.

Preferably, the first portion corresponds to one or more first segments of the video streaming content and the second portion corresponds to one or more second segments of the video streaming content.

Preferably, at least one of the one or more second segments has an overlap with at least one of the one or more first segments.

According to a second example aspect herein, there is provided a computer program comprising instructions which, when executed by at least one processor, cause the at least one processor to perform a method according to the first example aspect herein.

According to a third example aspect herein, there is provided a node for a peer-to-peer, P2P, network. The node comprises at least one processor, a network interface configured to connect to one or more nodes of the P2P network and at least one memory storing the computer program according to the second example aspect herein.

According to a fourth example aspect herein, there is provided a system comprising the node according to the second example aspect herein and one or more remote nodes. The one or more remote nodes are configured to store the video streaming content in the first video format and to store the video streaming content in the second video format.

According to a fifth example aspect herein, there is provided a computer program comprising instructions which, when executed by at least one processor, cause the at least one processor to perform a process for downloading a video streaming content over a peer-to-peer, P2P, network having a plurality of nodes, the process comprising the steps of:
obtaining resource information for the video streaming content indicating that at least one node of the P2P network stores the video streaming content with a first video format and that at least one node of the P2P network stores the video streaming content with a second video format, the second video format having a lower bitrate requirement than the first video format;
requesting, from a first node of the P2P network, a first portion of the video streaming content in the first video format, and obtaining from the first node first data comprising the first portion and first time information providing a time reference for at least one first video frame in the first portion;
initiating a playback of the video streaming content in accordance with the first video format;
determining, based on a decrease in throughput for downloading the video streaming content, to use the second video format in the playback of the video streaming content;
requesting, from a second node of the P2P network, a second portion of the video streaming content in the second video format and obtaining from the second node second data comprising the second portion and second time information, wherein the second portion is to be played in immediate succession to the first portion, wherein the second time information provides a time reference for at least one second video frame in the second portion; and
processing the first data, the second data, the first time information and the second time information to transition from the playback of the first portion to a playback of the second portion in accordance with the second video format.

According to a sixth example aspect herein, there is provided a node for a peer-to-peer, P2P network. The node comprises at least one processor configured to:
obtain resource information for a video streaming content indicating that at least one node of the P2P network stores the video streaming content with a first video format and that at least one node of the P2P network stores the video streaming content with a second video format, the second video format having a lower bitrate requirement than the first video format;
request, from a first node of the P2P network, a first portion of the video streaming content in the first video format and obtain from the first node first data comprising the first portion and first time information providing a time reference for at least one first video frame in the first portion;
initiate a playback of the video streaming content in accordance with the first video format;
determine, based on a decrease in throughput for downloading the video streaming content, to use the second video format in the playback of the video streaming content;
request, from a second node of the P2P network, a second portion of the video streaming content in the second video format and obtain from the second node second data comprising the second portion and second time information providing a time reference for at least one second video frame in the second portion, wherein the second portion is to be played in immediate succession to the first portion; and
process the first data, the second data, the first time information and the second time information to transition from the playback of the first portion to a playback of the second portion in accordance with the second video format.

### Brief description of the drawings

Embodiments of the present invention, which are presented for better understanding the inventive concepts, but which are not to be seen as limiting the invention, will now be described with reference to the figures in which:
Figure 1 shows a schematic diagram illustrating an example of a P2P network in example embodiments;
Figure 2 shows processing operations performed by a P2P network node in a first example implementation;
Figure 3 shows a schematic diagram illustrating a video streaming content in first video format, a second video format and a third video format, in example embodiments;
Figure 4 shows a schematic diagram illustrating a transition from the playback of a first portion to a playback of a second portion, in example embodiments;
Figure 5 shows processing operations performed by a P2P network node to request a portion of the video streaming content with a specific video format, in example embodiments;
Figure 6 shows processing operations performed by a P2P network node to determining a second video format to be used based on a decrease in throughput, in example embodiments;
Figure 7 shows processing operations performed by a P2P network node to detect a change in a value of at least one parameter indicative of the decrease in throughput, in example embodiments;
Figure 8 shows processing operations performed by a P2P network node to transition from playback of the first portion to a playback of the second portion in accordance with the second video format, in example embodiments;
Figures 9A and 9B each shows a schematic diagram illustrating an example of a transition from video frames of a first portion to a second portion, in example embodiments;
Figure 10 shows processing operations performed by a P2P network node in a second example implementation;
Figure 11 shows a schematic diagram illustrating an example of a processing device that may be used to implement a node for a P2P network in example embodiments.

### Detailed description

Although example embodiments will be described below, it will be evident that various modifications may be made to these example embodiments without departing from the broader spirit and scope of the invention. Accordingly, the following description and the accompanying drawings are to be regarded as illustrative rather than restrictive.

In the following description and in the accompanying figures, numerous details are set forth in order to provide an understanding of various example embodiments. However, it will be evident to those skilled in the art that embodiments may be practiced without these details.

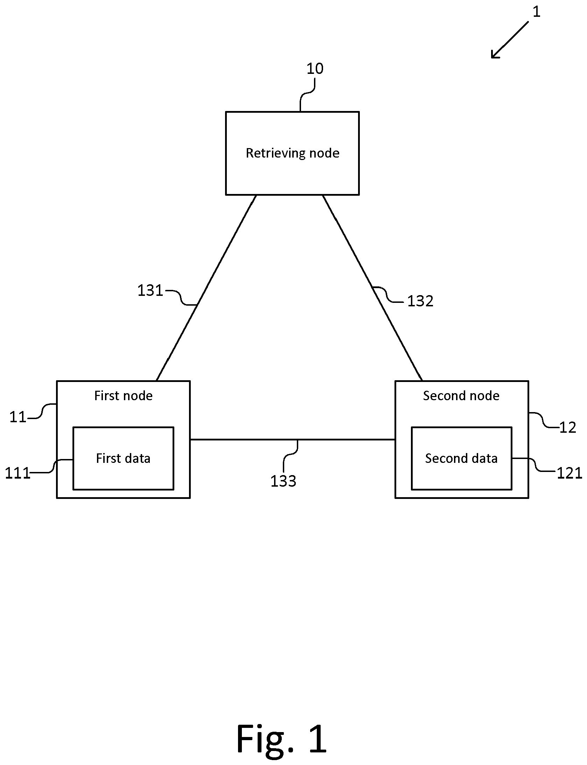

Figure 1 shows a schematic diagram illustrating an example of a P2P network 1.

By way of a non-limiting example, Figure 1 shows the P2P network 1 comprising three nodes: a node 10, which may also be referred to as a retrieving node herein as it retrieves a video streaming content from the P2P network for playback, a first node 11 and a second node 12.

It would be understood that the P2P network 1 may comprise any number of nodes, as the example of Figure 1 is non-limiting in this aspect.

Each node of the P2P network 1 comprises a processing device (e.g. a general kind of programmable processing apparatus) that can process data, cause a memory to store data and communicate with other nodes via a communication link.

The nodes in the P2P network 1 are connected to at least one other node via a communication link. In the example shown on Figure 1, a first communication link 131 connects the retrieving node 10 and the first node 11, a second communication link 132 connects the node 10 and the second node 12, and a third communication link 133 connects the first node 11 and the second node 12.

The nodes of the P2P network may be connected to each other via any suitable communication link, such as wireless communication link (for example a Wi-Fi or cellular telephone data link) or a wire, fire-optic cable, etc. Each communication link may not be permanent. The nodes of the P2P network may be connected to each other via one or more public (e.g. the Internet) or private computer networks (e.g. a local area network, LAN).

However, it would be understood that fewer or more communication links may be established between nodes, which may also act as relay between nodes. For example, the communication link 133 may be omitted, in which case the first node 11 and the second node 12 may be configured to communicate via the first communication link 131, the node 10 and the second communication link 132).

Each of the communication link may operate based on any suitable communication technology allowing the exchange of data, such as wireless communication link (for example a Wi-Fi or cellular telephone data link) or a wired communication (wire, fire-optic cable, etc.) Each communication link may not be permanent. Although the communication links are shown as direct link, this is purely for simplicity, as two nodes or more nodes of the P2P network may be connected to each other via one or more public (e.g. the Internet or a Wide Area Network, WAN) or private computer networks (e.g. a local area network, LAN, virtual private network, VPN, etc.), or any other suitable form of network.

The nodes 10, 11, 12 may communicate (for example to exchange information such as the first data 111, second data 121 and requests for information) using any suitable communication protocol or standard that is used on the P2P network, such as HyperText Transport (HTTP), Gnutella, etc.

The first node 11 stores first data 111 which comprises a first portion of the video streaming content in a first video format. The second node 12 stores second data 121 which comprises a second portion of the video streaming content in a second video format that is different from the first video format. As will be explained below, the node 10 makes a request to the first node 11 and obtains the first data 111 from the first node 11, and makes a request to the second node 12 and obtains the second data 121 from the second node 12 to playback the video streaming content.

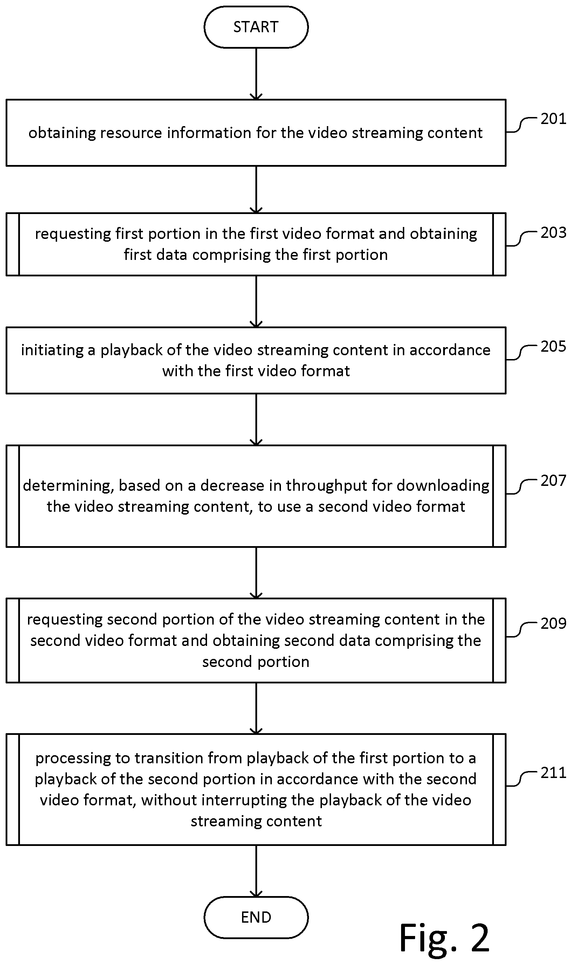

Referring now to Figures 2, 3 and 4, an exemplary implementation of retrieving portions of a video streaming content for playback will be described.

Figure 2 shows processing operations performed by a node (e.g. the node 10 of Figure 1) to playback a video streaming content obtained from a P2P network.

At step 201, the node 10 obtains resource information for the video streaming content.

The node 10 may obtain the resource information by any suitable process, such as querying a server of the P2P network 1 for a list of nodes storing (at least partially) the video streaming content (i.e. the video streaming content with any available video format), or querying each node (e.g. the first node 11 and the second node 12) for information on any data of the video streaming content that is stored thereon.

The obtained resource information indicates that at least one node of the P2P network (the first node 11) stores the video streaming content with a first video format and that at least one node (the second node 12) of the P2P network stores the video streaming content with a second video format.

The second video format may differ from the first video format in any number of characteristics, such as an image resolution (e.g. UHD, 4K, FHD, 1080p, 720p, etc.) being used, a video coding format (e.g. H.264, H.265, etc.), a frame rate. The difference in characteristic(s) leads to each video format having different bitrate requirements. In the present embodiment, the second video format has a lower bitrate requirement than the first video format.

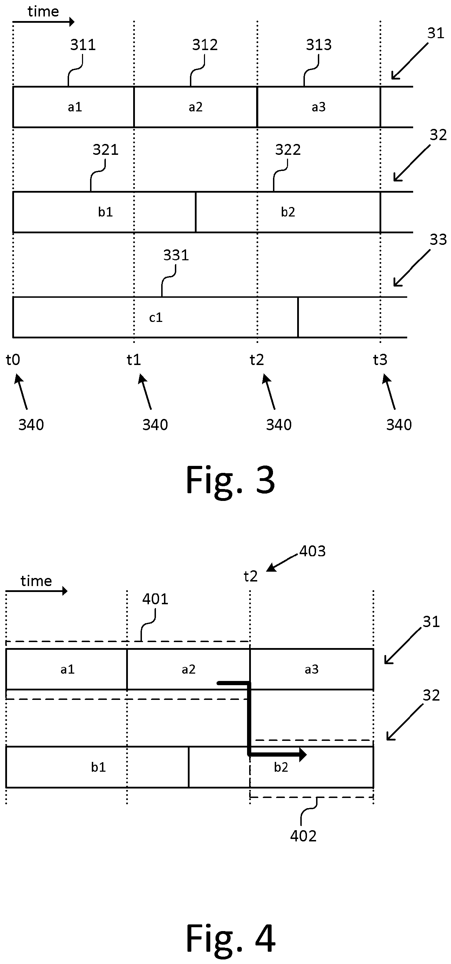

Referring now to Figure 3, an example of a streaming video content existing in different video formats will be described.

Figure 3 shows a schematic diagram illustrating a video streaming content that exists in a first video format 31, a second video format 32 and a third video format 33.

Each of these video formats differ from each other in at least one characteristic, leading to the video formats having different bitrate requirements.

By way of non-limiting example, the first video format 31 may use high resolution video frames, such as an ultra-high definition (e.g. 4K or 8K), the second video format 32 may use intermediate resolution video frames (e.g. 1080p), and the third video format 33 may use lower resolution video frames (e.g. 720p or lower).

Accordingly, the size of data required for playing back the same video streaming content in the third video format 33 is lower than the size in the second video format 32, which is in turn lower than the size in the first video format 31.

The first video format 31 includes segments 311, 312 and 313. As shown by the indication of time at the top of Figure 3, segment 311 is first in a playback order of the video streaming content, segment 312 to be played after segment 311, and segment 313 to be played after segment 312.

Segment 311 may be an initial segment of the video streaming content (i.e. it corresponds to a beginning of the video streaming content), or there may be one or more earlier segments of the video streaming content in the first video format 31, although not shown on Figure 3. Similarly, the segment 313 may be the last segment of the video streaming content (i.e. it corresponds to an end of the video streaming content) or there may be one or more segments to be played afterwards.

Similarly, the second video format 32 includes segments 321 and 322 in this playback order, and the third video format 33 includes the segment 331.

It would be understood that in each video format, the video streaming content may have any number of segments, although in each video format, the segments would have a combined playback running time that is the same (as they correspond to the same video streaming content).

By way of non-limiting example, the first video format 31 may have 100 segments of 6 seconds each for a combined playback running time of 600 seconds (1 hour), the second video format 32 may have 80 segments of 7.5 seconds each for the same combined playback running time, and the third video format 33 may have 60 segments of 10 seconds each (again for a combined playback running time of 1 hour).

In the following, discussion will be made of only the first video format 31 and the second video format 32, for conciseness, but it would be understood that any number of two or more video formats can be used.

Returning now to Figure 2, at step 203, the node 10 requests a first portion of the video streaming content in the first video format from the first node 11. As a result, the node 10 obtains the first data 111 comprising the first portion in the first video format.

The first data 111 also comprises first time information providing a time reference for at least one first video frame in the first portion.

By way of non-limiting example, the first time information may indicate, for each video frame in the first portion, a time period relative to a start of the video streaming content.

For example, this may be done by including in the first data 111, a timecode (e.g. SMPTE timecode such as a Vertical Interval TimeCode, VTIC, or any other suitable type of timecode) associated for each video frame in the first portion.

More specifically, if the first portion include N video frames, for each video frame Fi in the first portion (where i = 1...N is an incremental index of the video frame), the first time information could include a time period T(Fi) indicating a playback timing for the video frame Fi. The playback timing would define a time at which the video frame should be visualized relative to the start of a playback (i.e. a time period that should elapse between the start of a playback of the video streaming content and the playback of the video frame Fi).

In a specific implementation, one of the video formats is used as a reference video format, and a corresponding reference point can be used for each portion of the video streaming content in the reference video format. For example, as shown on Figure 3, a reference point 340 can be provided in correspondence with (e.g. at the beginning of) each portion of the first video format 31, where times t1 and t2 correspond to intermediate playback timings of the video streaming content.

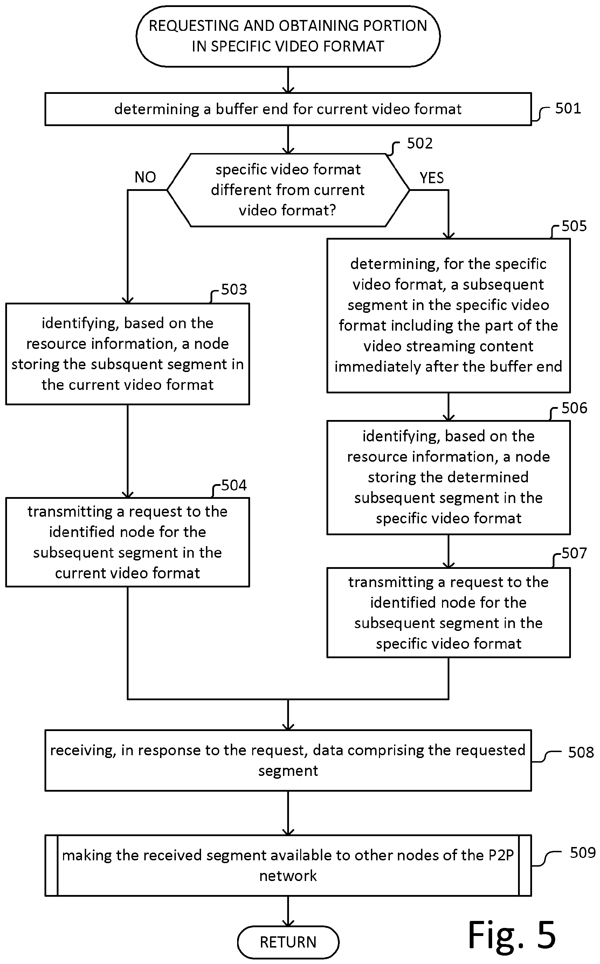

Details of the request for a portion of the video streaming content will be described in the following in reference to Figure 5.

At step 205, the node 10 initiates a playback of the video streaming content in accordance with the first video format.

Specifically, the node 10 causes a series of video frames corresponding to the first portion (or an earlier portion, if any) to be visualized in accordance with the first video format.

It would be understood that the first portion may be an initial portion of the video streaming content, but it may also be an intermediate portion, i.e. that there are one or more portions of the video streaming content in the first video format to be played before the first portion. Accordingly, the playback of the video streaming content in accordance with the first video format includes the playback of video frames corresponding to the first portion, and may include, beforehand, the playback of video frames corresponding to earlier portions (also in the first video format) of the video streaming content.

For brevity, details of playing back the video streaming content that would become apparent to the person skilled in the art will be omitted here.

At step 207, the node 10 determines, based on a decrease in throughput for downloading the video streaming content, to use a second video format. For example, a decrease that is susceptible to cause an interruption in the playback of the video streaming content in accordance with the first video format may be identified, leading to the node 10 determining to use the second video format for the remaining part of the video streaming content that is yet to be obtained and played back.

By way of non-limiting examples, the node 10 may identify a decrease that has occurred/is occurring, or may determine that such a decrease is likely to occur before a subsequent segment of the video streaming content with the same video format as the first portion can be downloaded.

This decrease in throughput indicates that the bitrate required by the first video format can no longer be supported to retrieve the video streaming content and play it without interruptions, hence the switch to the second video format having a lower bitrate requirement.

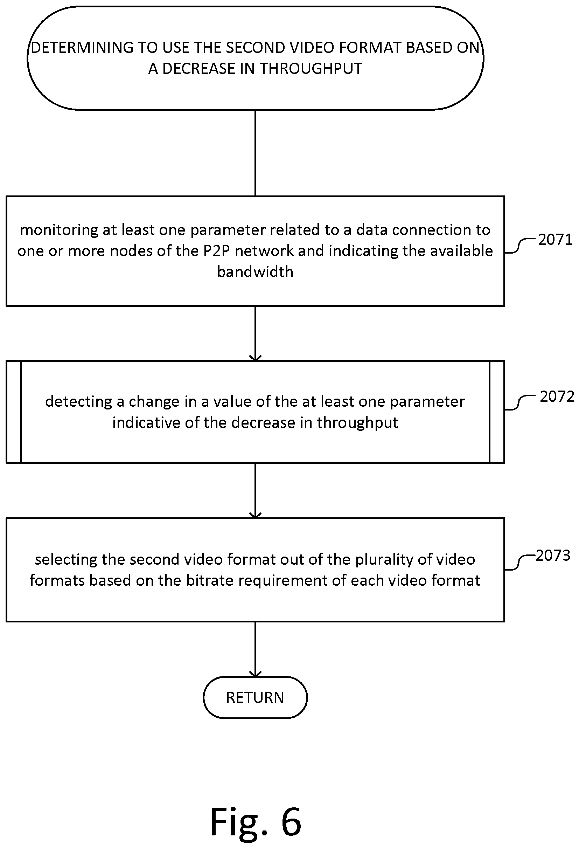

Details of the determination to use the second video format due to the decrease in throughput will be described in the following in reference to Figure 6.

At step 209, following the identification of the decrease in throughput, the node 10 requests the second portion in the second video format from the second node 12, and obtains second data comprising the second portion in the second video format. The second data 121 also comprises second time information providing a time reference for at least one second video frame in the second portion, similar to that explained above in connection with the first time information of the first data 111.

Details of the process for this request, which are similar to those described in connection with step 203 above, will be described in connection with Figure 5 below.

Due to the lower bitrate requirement of the second video format, the second portion can be obtained faster than a corresponding portion at the first video format, and thus can be obtained before the playback of the first portion ends (or at least reduce risks that the second portion is not obtained in time to be played back without interruption).

At step 211, the node 10 processes the first data 111 and the second data 121, and in particular the first time information in the first data 111 and the second time information in the second data 121, to transition from a playback of the first portion (i.e. of video frames of the first portion) in accordance with the first video format, to a playback of the second portion (i.e. of video frames of the second portion, in accordance with the second video format).

The first time information and the second time information are used to determine when the transition from the first portion to the second portion should take place.

By way of non-limiting example, the node 10 may determine, based on the first time information and the second time information, that a playback timing of a first video frame of the first portion coincides with a playback timing of a second video frame of the second portion. Accordingly, the node 10 would determine that the playback of the first portion should proceed until the first video frame, and then the playback of the second portion should proceed from the video frame immediately after the second video frame (the second video frame is not played as the same visual data was already played as the first video frame).

Assuming that no further change to the throughput occurs, the node 10 would continue to request for portions of the video streaming content in the second video format, until the entirety of the video streaming content is obtained and played back (or until the play back is stopped by a user), just like, if no decrease in throughput were to occur at all, the node 10 would have continued to request portions of the video streaming content in the first video format.

Referring now to Figure 4, a specific example of a transition will now be described.

Figure 4 shows a schematic diagram illustrating a transition from the playback of a first portion 401 to a playback of a second portion 402, in example embodiments.

In the example of Figure 4, the node 10 obtained first data comprising the first portion 401, corresponding to the segments a1 and a2 in the first video format, to playback the video streaming content in accordance with the first video format 31.

During the play back, a decrease in throughput is identified before the portion labelled "a3" can be retrieved in its entirety. Accordingly, the node 10 requests the second portion 402, and obtains the segment b2 in the second video format, to continue to playback the video streaming content in accordance with the second video format 32, without interruption.

The node 10 determines that the end of the first portion 401 coincides with a playback time t2, and after playing back the entire first portion 401, the node 10 plays back the second portion 402, i.e. the part of the segment b2 from the playback time t2 onwards, as shown on Figure 4 by the thick black arrow.

Accordingly, with the above process, the node 10 can transition from the playback of the first portion to a playback of the second portion, switching from the first video format to the second video format when transitioning. With this process, the node 10 also minimizes any loss or distortions in data to be visualized.

Referring now to Figure 5, processing operations performed by a P2P network node (e.g. the node 10) to request a specific portion of the video streaming content with a specific video format will be described.

At step 501, the node 10, determines a buffer end for the current video format.

For example, a buffer end may indicate the playback timing that comes last in the video streaming content of portion(s) in the video format that are already obtained (downloaded or already stored stored). In other words, the last point in the video streaming content that can be played in the specific video format. If no portion of the video streaming content has been obtained yet in the specific video format, the buffer end may indicate the beginning of the video streaming content.

In this context, the current video format may indicate the format that is currently used for the playback of the video streaming content when the request is initiated. If the playback has not yet started, the current video format may correspond to a predetermined video format (e.g. a default video format selected based on user preferences or other predefined settings in the node 10).

At step 502, the node 10 determines whether the video format was changed (e.g. due to a decrease being identified as in step 207 of Figure 2). In other words, whether the specific video format in which the portion is to be requested is different from the video format currently used for the playback of the video streaming content.

If the video format was not changed(NO at step 502), processing proceeds to step 503.

At step 503, the node 10 identifies, based on the resource information, at least one node storing the subsequent segment in the current video format.

In the present example, the subsequent segment is the segment to be played immediately after the buffer end determined at step 501.

After step 503, the node transmits, at step 504, a request to the identified node(s) (i.e. the nodes identified in step 503) a request for the subsequent segment in the current video format.

Then processing proceeds to step 508, which will be explained below.

Returning to step 502, if on the other hand the video format was determined to have changed (YES at step 502), processing omits steps 503 and 504, and proceeds to step 505 instead.

At step 505, the node 10 determines a subsequent segment in the specific video format that includes a part of the video streaming content that is immediately after the buffer end.

For example, the node 10 may determine which segment in the specific video format begins immediately after the playback timing indicated by the buffer end determined in step 501, or it may determine a segment that contains the playback timing corresponding to the buffer end determined in step 501, if the determined subsequent segment include a part of the video streaming content that is already downloaded in the current video format (i.e. having an overlap of one or more video frames with the first portion).

At step 506, the node 10 identifies, from the resource information, at least one node of the P2P network storing the determined subsequent segment in the specific video format.

Then, at step 507, the node 10 transmits a request to the identified node(s) (i.e. the node(s) identified in step 506) for a copy of the determined subsequent segment in the specific video format. Processing then proceeds to step 508.

At step 508, the node 10 receives a copy of the data in response to the request (i.e. the request transmitted in step 504 or in step 507) that comprises the requested segment in the requested video format (either the current video format if the request was made in step 504 or the specific video format if the request was made in step 507).

The node 10 can then store the received first data.

Then, at step 509, the node 10 makes the received subsequent segment available to other nodes in the P2P network, thus allowing other nodes to obtain in turn a copy of the subsequent segment in the received video format from the node 10.

It would be understood that the request at step 504 and/or the request at step 507 may be a request for multiple segments (e.g. multiple segments to be played in succession), and not necessarily for a single segment.

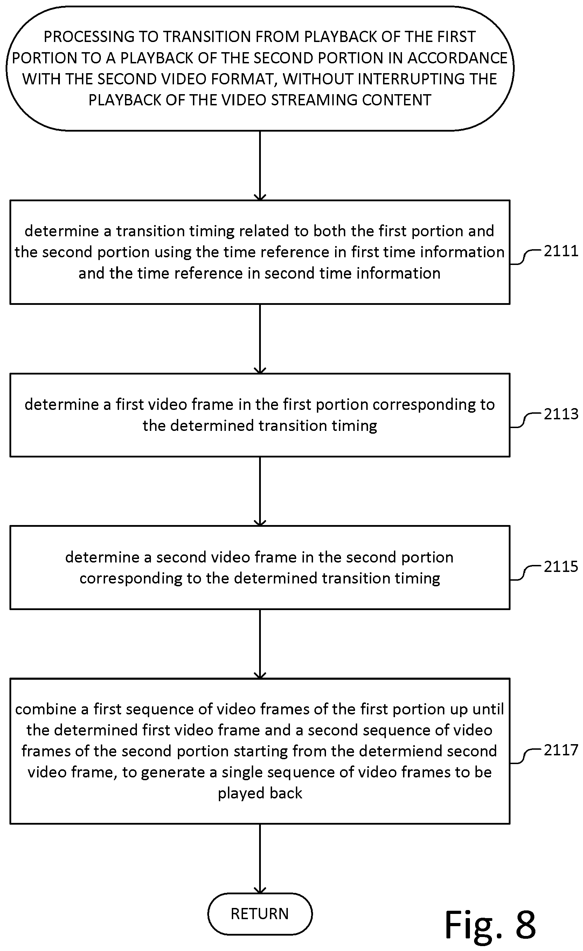

Details of the making a portion of the video streaming content available to other nodes will be described in the following in reference to Figure 8.

The following provide an Example 1 illustrating the request to the first node 11 for the first portion (made at step 203 of Figure 2) and an Example 2 illustrating the request to the second node for the second portion (made at step 209 of Figure 2). However, it would be understood that the process of Figure 5 can be carried out to request any portion of the video streaming content in a given video format from another node of the P2P network.

### Example 1:

At step 501 the current video format is the first video format, and the node 10 determines that the buffer end for the current video format corresponds to the playback timing immediately before the beginning of the first portion.

At step 502, as no new video format was selected, the node 10 determines NO, thus proceedings to step 503.

At step 503, the node 10 identifies the first node 11 as storing the segments a1 and a2 of the first portion in the first video format.

At step 504, the node 10 transmits a request to the first node 11 identified in step 503 for the segments a1 and a2.

At step 508, the node 10 receives the first data 111 comprising the segments a1 and a2.

At step 509, the node 10 makes the received subsequent segment a1 in the first video format 31 available to other nodes.

It would be understood that, in other examples, each segment of a portion may be requested and obtained using separate requests.

### Example 2:

At step 501, the current video format is still the first video format 31 but the second portion is to be requested in another format (i.e. the second video format 32). The node 10 determines the buffer end for the current (first) video format 31 is the end of the first portion 401, as the first portion 401 has already been obtained.

At step 502, the node 10 determines that the specific video format (second video format 32) is different from the current video format (first video format 31), thus YES at step 502, leading to step 505.

At step 505, the node 10 determines that the segment in the second video format 32 including the part of the video streaming content immediately after the buffer end is the segment b2.

At step 506, the node 10 identifies the second node 12 as storing the segment b2 for the second portion.

At step 507, the node 10 transmits a request to the second node 12 for a copy of the segment b2 in the second video format.

At step 508, the node 10 receives second data 121 comprising the requested segment b2 in the second video format.

At step 509, the node 10 makes the received subsequent segment b2 in the second video format 32 available to other nodes.

Referring now to Figure 6, an example of processing operations performed by a P2P network node to determine to use a second video format based on a decrease in throughput will now be described.

At step 2071, the node 10 monitors at least one parameter related to a data connection to one or more nodes of the P2P network. For example, referring to exemplary P2P network shown on Figure 1, the node 10 may monitor one or more parameters related to the first communication link 131 to the first node 11, one or more parameters related to the second communication link 132 to the second node 12, or both.

The parameters related to the data connection can include any monitorable parameter that is suitable to indicate a throughput, such as an instantaneous or average download speed, an instantaneous or average upload speed, a latency value (e.g. obtained with a ping test), an error rate (e.g. a bit error rate, packet loss rate), etc. The parameter(s) may be based on transmission solely for the retrieval of portions of the video streaming content, or may be based on all services transiting on the monitored communication link.

These parameters or their combination can be used to determine a throughput for the download of the video streaming content.

At step 2072, a change in a value of the at least one parameter is detected.

This may be a change in a value of one (or the) parameter being monitored, or a change in the respective value of multiple parameters.

This change indicates that the throughput decreased and in particular, that the bitrate required by the first video format may not be achieved.

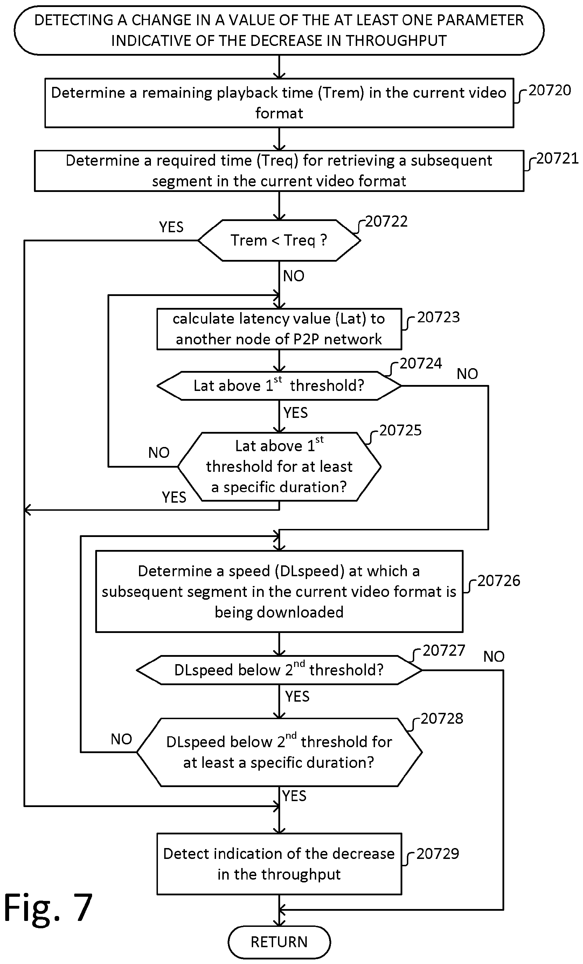

Details of the detection of a change in a value of parameter(s) will be described in the following in reference to Figure 7.

As would become apparent to the person skilled in the art, the change in value of the monitored parameter(s) may be due to a change or issue on the communication link itself, a change on the communicating node (e.g. on the interface with the communication link), or because of changes to bandwidth allocation (for example if the bandwidth allocated to processes or services having a higher priority than the playback of the video streaming content increases, leaving less bandwidth to be allocated to the retrieval and playback of the video streaming content), the details of which will be omitted here for brevity.

Then, at step 2073, the node 10 selects a video format out of the plurality of video formats in which the video streaming content is available on the P2P network, based on the bitrate requirement of each video format.

In the present example, the node 10 selects the second video format by determining that the bitrate requirement of the second video format is the highest that can be sustained with the decreased throughput for downloading the video streaming content, thus promising the best possible quality whilst avoiding interruption in the playback.

Referring now to Figure 7 an example of processing operations performed by a P2P network node to detect a change in a value of at least one parameter indicative of the decrease in throughput will now be described.

At step 20720, the node 10 determines a remaining playback time Trem in the current video format.

For example, if a video frame F_{current} of a current video format is being currently played, the node 10 may determine a playback timing t(F_{current}) of the current video frame, and a playback timing t(Fₗₐₛₜ) of a last frame Fₗₐₛₜ of the current video format. The remaining playback time Trem can be determined as the difference indicated between the two playback timings, i.e. t(Fₗₐₛₜ) - t(F_{current}).

In an exemplary implementation, the node 10 may determine the playback timing of each video frame using a respective timecode in the first time information, so the remaining playback time Trem is based on a difference between the time indicated by two timecodes. At step 20721, a required time Treq for retrieving a subsequent segment of the video streaming content in the current video format is determined. This determination can be based on a ratio of the size of a segment of the video streaming content in the current video format (e.g. 50MB) and the throughput for downloading the video streaming content (e.g. 4Mbps).

In this example, the subsequent segment is the segment to be played immediately after the last segment in the current video format that is already obtained.

At step 20722, the node 10 determines whether the remaining playback time Trem determined at step 20720 is less than the required time Treq determined at step 20721, i.e. if Trem < Treq, which would indicate that the subsequent segment cannot be downloaded in time to be played after the segments already downloaded without causing an interruption in the playback.

For simplicity, the present disclosure omits discussion on any time delay that may be required by the node, e.g. for decoding the data, decompressing the received data, storing it or otherwise processing the data in order to be able to play it. However, it would be understood that the calculation of Trem and/or the calculation of Treq can take into account any processing delay for the subsequent segment (e.g. such required time delay can be deducted from Trem and/or added to Treq).

If it is determined that Trem < Treq (YES at step 20722), processing proceeds to step 20729.

At step 20729, an indication of the decrease in throughput is detected.

If on the other hand it is determined that Trem is equal to or greater than Treq (NO at step 20722), processing proceeds to step 20723.

Thus, the steps 20720 to 20722 form a first determination that a remaining playback time to a playback timing of a last video frame in the current (e.g. first) video format is less than a time required for downloading a subsequent segment of the video streaming content at the first video format.

At step 20723, the node 10 calculates a latency value Lat to another node of the P2P network. For example, this may be done by performing a ping test to one or more nodes storing the subsequent segment of the video streaming content in the first video format.

At step 20724, the node 10 determines whether the latency value Lat is higher than a first threshold (for example above 50ms).

If the latency value is higher than the first threshold (YES at step 20724), processing proceeds to step 20725.

At step 20725, the node 10 determines whether the latency value has been above the first threshold for at least a first specific duration.

For example, the node 10 may initiate a timer the first time that the latency value is determined to be above the first threshold (YES at step 20724), and at step 20725, the node 10 may use the timer to determine whether the time elapsed since the first determination is equal to or greater than a first specific duration (for example 5 seconds).

If the latency value has not been above the first threshold for at least the first specific duration (NO at step 20725), processing returns to step 20723, to calculate the latency value anew.

If on the other hand the latency value has been above the first threshold for at least the first specific duration (YES at step 20725), processing proceeds to step 20729, which has been explained above.

Returning to the explanation of step 20724, if the latency value is equal to or lower than the first threshold (NO at step 20724), processing proceeds to step 20726.

In such a case, any a timer that was started earlier due to the latency value may be reset.

Thus, the steps 20723 to 20725 form a second determination that a latency value to a node of the P2P network is above a first threshold.

At step 20726, the node 10 determines a speed DLspeed at which the subsequent segment of the video streaming content in the first video format is being downloaded.

This may be, for example, an average over the whole part of the subsequent segment that has been downloaded, or it may be based on the most recent values (for example a rolling average of the last 4 seconds of download).

At step 20727, the node 10 determines whether the download speed is below a second threshold (e.g. 10Mbps).

If the download speed value is below the second threshold (YES at step 20727), processing proceeds to step 20728.

At step 20728, the node 10 determines whether the download speed has been below the second threshold for at least a second specific duration.

As with the second determination above regarding the latency value, the node 10 may start a timer the first time that the download speed is determined to be below the second threshold (YES at step 20727) and use this timer to make the determination in step 20728.

If the download speed has not been below the second threshold for at least the second specific duration (NO at step 20728), processing returns to step 20728, to determine the download speed anew.

If on the other hand the download speed has been below the second threshold for at least the second specific duration (YES at step 20728), processing proceeds to step 20729, which has been explained above.

Returning to the explanation of step 20727, if the download speed is equal to or greater than the second threshold (NO at step 20727), processing ends.

In such a case, any a timer that was started earlier due to the download speed may be reset.

Thus, the steps 20726 to 20728 form a third determination that a speed at which the video streaming content is being retrieved from other nodes of the P2P network is below a second threshold.

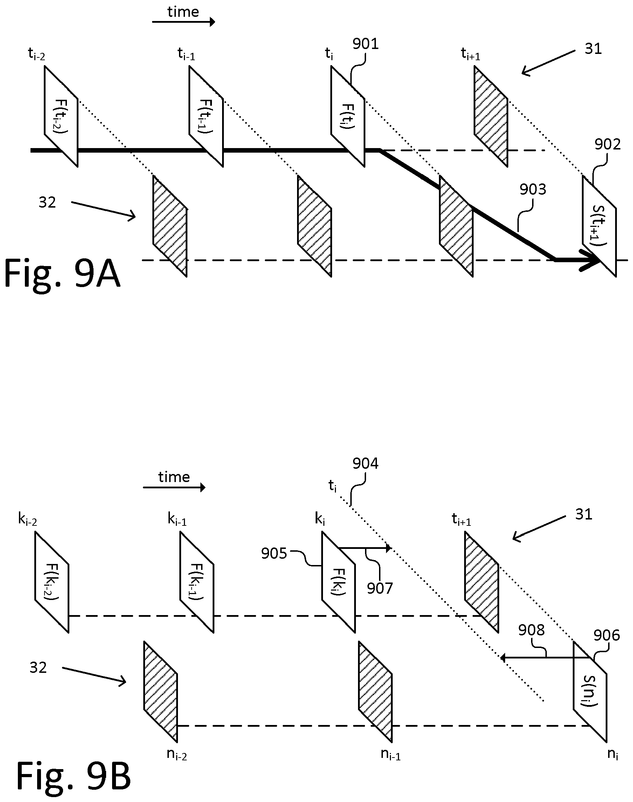

Referring now to Figures 8, 9A and 9B, processing operations performed by a P2P network node to transition from playback of one portion in accordance with one video format to a playback of another portion in accordance with another video format will now be described.

For simplicity, the following will refer to the transition from a playback of the first portion in accordance with the first video format to a playback of the second portion in accordance with the second video format. However, it would be understood that the process can be used for the transition between playback of any two portions that are in two different video formats.

At step 2111, the node 10 uses the time reference in the first time information and the time reference in the second time information to determine a playback timing related to both the first portion and the second portion, as a transition timing (i.e. a playback timing at which to execute the transition).

As used herein, a playback timing may relate to a portion if it coincides substantially with the playback timing range of the portion (i.e. the range defined by the respective playback timing of the video frames in the portion). This extends to the timings located outside the playback timing range of the portion by less than the interval between two consecutive video frames (i.e. based on a frame rate). Specifically, it extends to an interval preceding the portion, between the playback timing of an initial video frame of the portion and the immediately preceding video frame (not in the portion), and to an interval succeeding the portion, between the playback timing of the final/last video frame of the portion and the playback timing of the immediately succeeding video frame (not in the portion).

Referring now to Figure 9A, this shows an example of a transition where the video frames in the first video format 31 have playback timings (tᵢ₋₂, tᵢ₋₁, tᵢ, tᵢ₊₁) in common with video frames in the second video format 32.

Figure 9A shows an example where a timing 901 is selected as the transition timing at step 2111. Timing 901 coincides with the playback timing of a video frame F(tᵢ) of the first portion, and with the playback timing of a video frame of the second portion.

However, as shown on Figure 9B, the video frames in different video formats may have different playback timings (for example, due to the video formats using different frame rates). Figure 9B shows an example where a timing 904 is selected at step 2111 as the transition timing.

At step 2113, the node 10 determines a first video frame in the first portion corresponding to the transition timing determined in step 2111.

In the example of Figure 9A, the node 10 determines the video frame F(tᵢ) which has a playback timing that corresponds to the transition timing.

In the example of Figure 9B, the node 10 determines the video frame F(kᵢ) as it is the video frame having a playback timing that is the nearest to and preceding the transition timing, as shown by the timing difference 907. Accordingly, all video frames of the first portion up until the transition timing would be played back.

At step 2115, the node 10 determines a second video frame in the second portion corresponding to the transition timing determined in step 2111.

In the example of Figure 9A, the node 10 determines the video frame 902 (labelled S(tᵢ₊₁)) as it is the video frame of the second portion having a playback timing immediately after the transition timing 901. In this example, it is noted that the video frame having a playback timing that coincides with the transition timing 901 is omitted, as it includes the same visual data as the first video frame 901 selected at step 2113.

In the example of Figure 9B, the node determines, in a process mirroring that of step 2113, the video frame 906 (labelled S(nᵢ)) as it is the video frame having a playback timing that is the nearest to and following the transition timing, as shown by the timing difference 908.

At step 2117, the node 10 combines a sequence of video frames of the first portion ending with the first video frame determined at step 2113, and a sequence of video frames of the second portion starting from the second video frame determined at step 2115, to generate a single sequence of video frames to be played back, thus avoiding interruption in the play back of the video streaming content.

Figure 9A indicate the sequence of video frames being played back with the arrow 903. The video frames of the first video format 31 and those of the second video format 32 not being played back (either because they are not obtained or they are discarded), are shown with hatching.

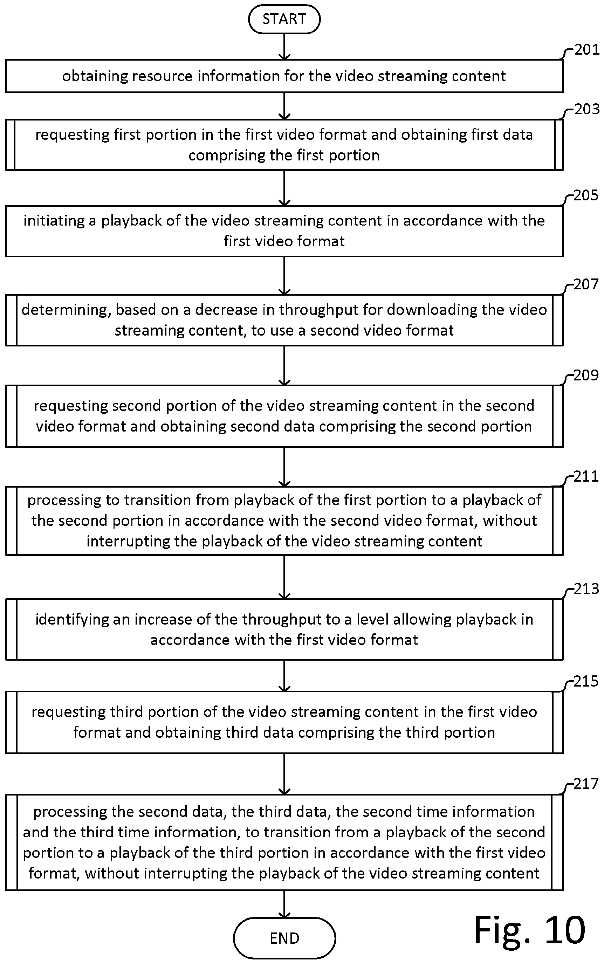

Referring now to Figure 10, a second exemplary implementation of retrieving portions of a video streaming content for playback will be described.

The process for steps 201 to 211 is the same as described above with reference to Figure 2, and will therefore be omitted here for brevity. Description will be made of steps 213, 215 and 217.

At step 213, the node 10 identifies an increase in throughput to a level allowing playback in accordance with the first video format. For example, substantially the same process as shown on Figures 6 and 7 may be used to identify an increase (which may be based on the monitoring of the same parameters as used to identify a decrease), with different sets of thresholds and inverting the determinations at step 20724 (the measured latency being below a threshold) and at step 20727 (the measured download speed being above a threshold), as would become apparent to the person skilled in the art.

At step 215, the node 10 requests from a third node a third portion of the video streaming content in the first video format. The third node may be the first node 11, the second node 12 or another node of the P2P network that is not shown on Figure 1. The third portion is to be played in immediate succession to the second portion. The node 10 receives third data from the third node, which comprises the third portion in the first video format and third time information providing a time reference for at least one third video frame in the third portion.

The process for requesting the third portion may be substantially the one described with reference to Figure 5 above.

At step 217, the node 10 processes the second data, the third data, the second time information and the third time information, to transition from a playback of the second portion to a playback of the third portion in accordance with the first video format, without interrupting the playback of the video streaming content.

The process for transitioning from the second portion to the third portion may be substantially the one described with reference to Figures 8, 9A and 9B above.

Thus, the node 10 may return to playing back the video streaming content with the first video format, without interruption or loss of visual data corresponding to video frames.

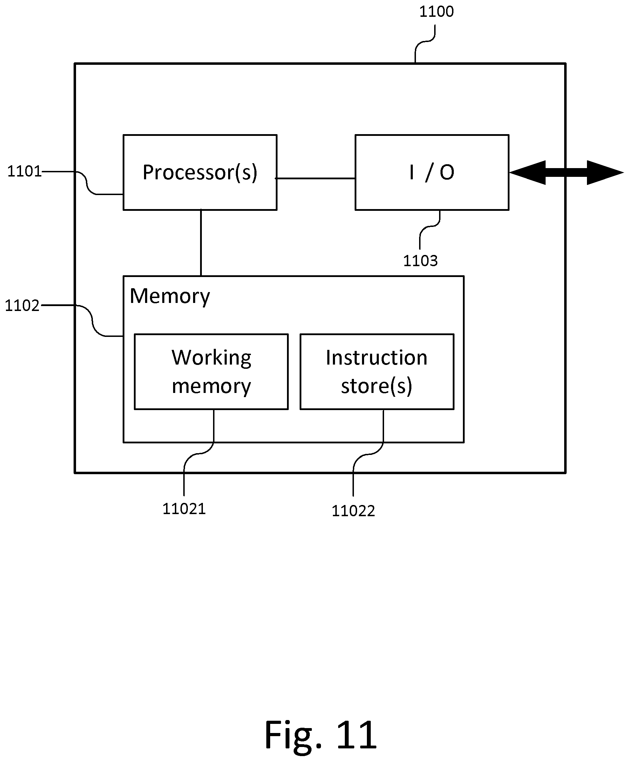

Referring now to Figure 11, an example of a processing device 1100, e.g. a general kind of programmable processing apparatus, that may be used to implement the node 10, the first node 11 and/or the second node 12, or a server of the P2P network having resource information, will be described.

The programmable processing device 1100 comprises one or more processors 1101, one or more interfaces (or input/output communication modules) 1103, and memory 1102 comprising one or more working memories 11021, and one or more instruction stores 11022 storing computer-readable instructions which can be executed by the one or more processors 1101 to perform the processing operations as described herein.

An instruction store 11022 is a non-transitory storage medium, which may comprise a nonvolatile memory, for example in the form of a read-only-memory (ROM), a flash memory, a magnetic computer storage device (for example a hard disk) or an optical disk, which is pre-loaded with the computer-readable instructions. Alternatively, an instruction store 11022 may comprise writeable memory, such as random access memory (RAM) and the computer-readable instructions can be input thereto from a computer program product, such as a non-transitory computer-readable storage medium (for example an optical disk such as a CD-ROM, DVD-ROM, etc.) or a computer-readable signal carrying the computer-readable instructions. The combination of hardware components shown in Figure 11 and computer-readable instructions are configured to implement the functionality of the node 10, the first node 11, the second node 12, and/or a server of the P2P network.

In the description herein, operations caused when a processor 1101 executes instructions stored in an instruction store 11022 is described herein generally as operations performed by the node 10 (e.g. "the node 10 determines ...", "the node 10 requests...", etc.).

### Modifications and Variations

Many modifications and variations can be made to the example embodiments described above.

For example, it would be understood that the steps of the method need not be performed in the given order. In particular, the second portion may be requested from the second node before the playback of the first portion is initiated, to obtain a buffer of the video streaming content, i.e. step 205 may occur after step 209 or even after step 211.

It would be understood that the time information (e.g. the first, second and/or third time information described herein) need not indicate a time reference for all video frames in the corresponding portion. For example, the time reference may be provided only for the initial video frame or the last video frame of the portion. With a predetermined frame rate, the time reference for any video frame in the portion can be derived from that time reference. Alternatively, the time reference may be provided for every m video frames in the portion (where m is an integer equal to 2 or higher), i.e. for the video frames Fᵢ, Fᵢ₊ₘ, Fᵢ₊₂ₘ, etc.

It would also be understood that although the start of the video streaming content can be used as a reference point (relative to which the time information indicates a time period for at least one video frame), the present invention is not limited thereto. Any other specific point in the video streaming content can be used as a reference point. For example, any of the reference point 340 shown on Figure 3 (labelled as t0, t1, t2 or t3) could be used instead.

Although transitioning from the first portion 401 to the second portion 402 at the end of the first portion 401 may be preferable, as it allows the user to enjoy the video streaming content in the first video format (having a higher bitrate requirement and thus presumably providing a higher quality) for a longer period, it would be understood that the transition from the first portion 401 to the second portion 402 may occur at any other moment that could be identified to correspond to both portions. For example, the node 10 could identify a "stop" video frame Fl of the first portion that corresponds to an initial video frame of the second portion. The node 10 could then play back the video frames of the first portion up until the video frame that is the immediate predecessor of the "stop" video frame F1, and continue with playing back the second portion from its initial video frame. This could allow a transition that is less noticeable to the user, and/or reduce the processing requirement for the transition, as the node 10 would not need to discard any video frames at the beginning of the second portion.

More generally, it should be understood that although a playback timing for a beginning of the second portion can coincide with a playback timing for an end of the first portion, an overlap can exist (i.e. the playback timing for a segment at the beginning of the second portion being earlier than the playback timing for the end of the first portion), in which case a transition from the first portion to the second portion can be done at any suitable instant of the overlap.

It would be understood that when requesting a portion, the node 10 may transmit a single request for multiple segments (e.g. requesting both segments a1 and a2 corresponding to the first portion 401 from the first node 11 at the same time), or may perform the process of Figure 5 for each segment of the portion.

It would be understood that the node 10 need not make a portion available to other nodes of the P2P network, in which case step 2036 can be omitted.

Whilst the process of Figure 6 is described as a step within the process of Figure 2, it would be understood that these steps may be repeatedly performed. For example, the monitoring of parameter(s) in step 2071 and the detecting a change in a value of the parameter(s) can be performed repeatedly, in parallel and/or independently of whether a video streaming content is being retrieved or played back. In such a case, when a video streaming content is being played back, the decrease in throughput may already be detected by the parallel/independent process, such that only step 2073 is performed, if there are more than one video format with a lower bitrate to choose from.

It would be understood that, in cases where the video streaming content is only available in two video formats, then no selection of video format is needed, such that step 2073 may be omitted.

Further, it would become apparent to the person skilled in the art that during the download and playback of a same video streaming content, two (or more) decrease in throughput may be identified, leading the node to perform the process step 207 twice and for the playback to transition from a first video format to a second video format, and then from the second video format to a third video format, where the first, second and third video format have decreasing bitrate requirements.

If the process of Figure 7 is performed before the first portion starts to be played, the remaining playback time Trem until the end of the first portion may be determined as the sum of a remaining playback time of any portions preceding the first portion yet to be played back and the entire playback time of the first portion.

Any of the first threshold, the first specific duration used for the second determination, the second threshold and the second specific duration may be a predetermined value.

For example, this may be a single predetermined value or a separate value may be predetermined for each video format available (for example based on a characteristic of the video format such as the bitrate requirement of each video format).

However, this is not limiting as any of these may be a value determined for the video streaming content specifically (e.g. based on the resource information, such as how many nodes are determined to store portions of the video streaming content), or determined dynamically during the download of the video streaming content (e.g. based on a correlation between the corresponding value and the throughput determined based on past values, e.g. using machine learning).

With the second check of step 20725, ephemeral spikes of the latency value which would not have a noticeable effect on the playback of the video streaming content (i.e. not likely to cause an interruption) can be ignored to avoid unnecessarily or precociously switching to another video format in the playback of the video streaming content. Similarly, the step of 20728 avoid ephemeral drops in the download speed which would not have a noticeable effect on the playback of the video streaming content.

However, in some cases, a single determination at step 20724 that the latency value is too high might be sufficient to cause a transition to another video format. Thus, step 20725 may be omitted.

For similar reasons, the step 20728 may be omitted as well.

Although the first determination regarding the remaining playback time and required time, the second determination regarding the latency value, and the third determination regarding the download speed have been described as sequentially performed, they may be performed in parallel and independently. In addition any of the first determination, second determination and third determination may be repeated periodically.

Although on Figure 7, any of the first determination, the second determination and the third determination leads to detecting an indication that the throughput decreased at step 20729, this is not limiting. The detection at step 20729 may instead be based on a combination of two or more of the first determination, the second determination and the third determination.

### List of reference signs

1: P2P network
10: node/retrieving node
11: first node
12: second node
111: first data
121: second data
131, 132, 133: communication links
31: video streaming content in the first video format
311, 312, 313: segments of the video streaming content in the first video format
32: video streaming content in the second video format
321, 322, 323: segments of the video streaming content in the second video format
33: video streaming content in a third video format
331: segments of the video streaming content in a third video format
340: reference point
401: first portion
402: second portion
901, 905: first video frame
902, 906: second video frame
903: playback sequence of video frames
904: transition timing
907: timing difference of first video frame to transition timing
908: timing difference of second video frame to transition timing
1100: processing device
1101: processor(s)
1102: memory
11021: working memory
11022: instruction store(s)
1103: interface (input/output communication module)

## Claims

1. A method for downloading a video streaming content over a peer-to-peer, P2P, network having a plurality of nodes, the video streaming content comprising a first portion and a second portion to be played in immediate succession to the first portion, the method comprising:
obtaining resource information for the video streaming content indicating that at least one node of the P2P network stores the video streaming content with a first video format and that at least one node of the P2P network stores the video streaming content with a second video format, the second video format having a lower bitrate requirement than the first video format;
requesting, from a first node of the P2P network, the first portion in the first video format, and obtaining from the first node first data comprising the first portion in the first video format, wherein the first data comprises first time information providing a time reference for at least one first video frame in the first portion;
initiating a playback of the video streaming content in accordance with the first video format;
determining, based on a decrease in throughput for downloading the video streaming content, to use the second video format in the playback of the video streaming content;
requesting, from a second node of the P2P network, the second portion in the second video format, and obtaining from the second node second data comprising the second portion of the video streaming content in the second video format, wherein the second data comprises second time information providing a time reference for at least one second video frame in the second portion; and
processing the first data, the second data, the first time information and the second time information, to transition from the playback of the first portion to a playback of the second portion in accordance with the second video format.

2. The method according to claim 1, wherein
the processing to transition comprises determining a second video frame in the second data to be played in immediate succession of a first video frame in the first data, based on the first time information and the second time information.

3. The method according to claim 2, wherein the first video frame is a last video frame of the first portion and/or the second video frame is a first video frame of the second portion.

4. The method according to any of claim 1 to 3, wherein
the first time information defines for each of the at least one first video frame, a respective first time period relative to a reference point of the video streaming content, and
the second time information defines, for each of the at least one second video frame, a respective second time period relative to a reference point of the video streaming content.

5. The method according to claim 4, wherein the reference point is one of: a start of the video streaming content, an end of the video streaming content or one of a number of periodic intermediate playback timings of the video streaming content.

6. The method according to any of claims 1 to 5, further comprising:
identifying an increase in throughput to a level allowing playback in accordance with the first video format;
requesting, from a third node, a third portion of the video streaming content in the first video format, and obtaining from the third node third data comprising a third portion of the video streaming content in the first video format, wherein the third portion is to be played in immediate succession to the second portion, and wherein the third data comprises third time information providing a time reference for at least one third video frame in the third portion; and
processing the second data, the third data, the second time information and the third time information, to transition from a playback of the second portion to a playback of the third portion in accordance with the first video format, without interrupting the playback of the video streaming content.

7. The method according to any of claims 1 to 6, wherein the identifying the decrease in throughput comprises:
monitoring at least one parameter related to a data connection to one or more nodes of the P2P network and indicating the throughput, and
detecting a change in a value of the at least one parameter indicative of the decrease in throughput.

8. The method according to any of claims 1 to 7, wherein the identifying the decrease in throughput is based on at least one of:
a first determination that a remaining playback time to a playback timing of a last video frame of the first portion is less than a time required for downloading a subsequent segment of the video streaming content in the first video format;
a second determination that a latency value to a node of the P2P network is above a first threshold; and
a third determination that a speed at which the video streaming content is being retrieved from other nodes of the P2P network is below a second threshold.

9. The method according to any of claims 1 to 8, wherein
the resource information for the video streaming content indicates that the video streaming content is stored on the P2P network with a plurality of video formats including the first video format the second video format, each video format having a respective bitrate requirement, and
the determining to use the second video format comprises selecting the second video format out of the plurality of video formats based on the respective bitrate requirement of each video format.

10. The method according to any of claims 1 to 9, further comprising:
receiving, from another node of the P2P network, a request for a part of the video streaming content comprising the first portion in the first video format or the second portion in the second video format; and
transmitting, to the other node, the requested part.

11. The method according to any of claims 1 to 10, wherein the first video format and the second video format differ in at least one of a resolution of the video streaming content and a video compression format.

12. The method according to any of claims 1 to 11, wherein the first portion corresponds to one or more first segments of the video streaming content and the second portion corresponds to one or more second segments of the video streaming content.

13. The method according to claim 12, wherein at least one of the one or more second segments has an overlap with at least one of the one or more first segments.

14. A computer program comprising instructions which, when executed by at least one processor, cause the at least one processor to perform a method as set out in any of claims 1 to 13.

15. A node for a peer-to-peer, P2P, network, comprising at least one processor, a network interface configured to connect to one or more nodes of the P2P network and at least one memory storing the computer program as set out in claim 14.
